# EUROPEAN PATENT APPLICATION

(11) **EP 4 700 667 A1**
(43) Date of publication of application: **25.02.2026**
(21) Application number: 24774334.7
(22) Date of filing: 12.03.2024
(51) Int. Cl.: G06Q 10/00, G06Q 20/38, H04L 9/06, G06K 19/06

(54) **SYSTEM AND METHOD FOR DYNAMIC AUTHENTICATION OF PRODUCTS USING BLOCKCHAIN TECHNOLOGY**

(30) Priority: 23.03.2023 CO 23003654
(71) Applicant: Certiblock S.A.S, Medellin (CO)
(72) Inventor: RESTREPO ESTRADA, Mariano, deceased (CO)
(74) Representative: Martin Santos, Victoria Sofia
(86) International application number: PCT/IB2024/052395
(87) International publication number: WO 2024/194742

(57) **Abstract**

The invention is developed in the field of technology. The invention relates to a system for dynamically authenticating alcoholic beverages, including digital cryptographic mechanisms that allow real-time access to the status of an alcoholic beverage, through the use of blockchain technology. In particular, the system consists of a "quick-response" (QR) code provided on the inside of the lid (liner) or cap or cork or dispenser or device used to close the product and the QR code is only displayed when the product is open, to then be authenticated by the user when they wish to verify the legitimacy and traceability of the product. A cryptoasset (not cryptocurrency) is linked to each QR code, which is backed by the blockchain, and, by reading the unique QR code printed on each cap, the metadata thereof is obtained via the web. Only the first status of the bottle "BOTTLE SAFE FOR CONSUMPTION" is obtained when it is read for the first time, then the second status of the digital asset "BOTTLE PREVIOUSLY OPENED" will always be displayed, making it impossible to return to the first status of the bottle given the immutability and security of the blockchain. This dynamic digital asset can be associated with a type of dynamic NFT, such as a cryptoasset (NOT CRYPTOCURRENCY), and therefore, the system according to the invention constitutes a novel and inventive alternative for the traceability of products by manufacturers and users, in particular in the liquor industry, since it constitutes a simple and efficient validation mechanism to determine relevant information of the alcoholic products in real time, taking care of user health, and at the same time combating other areas such as illegal liquor distribution, given that, within the metadata of this dynamic digital asset, there will always be the regional consumption stamp, so that if the bottle is authorised for a specific region, and a user scans the same bottle in another unauthorised region, this would technically constitute smuggling, which would enable this problem to be combated in the same way. This system is easy to implement in companies producing alcoholic beverages without slowing down their production lines and allowing them to obtain data on consumer behavior not previously possible.

## Description

### Field of technology

The present invention is developed in the field of technology. Particularly, the present invention discloses a system and a method to dynamically and efficiently authenticate products acquired by a user through the use of "Blockchain"-type technology.

### Background

For many producers and consumers, it is essential to have control and tracking over manufactured and consumed products in order to prevent improper or inappropriate handling of such products. In particular, the liquor industry faces significant challenges regarding the control and tracking of its products during manufacturing and final consumption by users. Indeed, it is well known that one of the products requiring the most attention, control, and regulation corresponds to alcoholic beverages, since these are products highly susceptible to adulteration and illegal distribution, which leads to situations of economic loss for the industry, the growing development of a criminal culture, and health risks for consumers, including death. In this regard, the greatest challenge for the liquor industry is to prevent the counterfeiting of its products, which involves altering an original product for a consumer in its content, quality, and production methods, turning it into a "copy" or adulterated product that also contains altered substances that do not correspond to or were not considered by its original manufacturer.

The most obvious risk of this process of adulterating alcoholic beverages consists of the potential dangers for consumers due to intoxication or death, given that these products are intended for human consumption. This is because the adulteration of alcoholic beverages does not meet the quality standards of the original producer, which clearly implies a potential risk for the consumer, who would be exposed to toxic or harmful substances that may cause intoxication, sequelae, or death.

Various mechanisms and technological developments to counteract the multiple attempts to adulterate alcoholic beverages are well known in the state of the art. Many of these mechanisms focus on the production process and traceability within the production chain, which have not been effective in reducing the high rates of adulteration. Faced with this scenario, alcoholic beverage manufacturers are highly interested and willing to combat the proliferation of bottles with adulterated liquor, and for this reason, several solutions have emerged in the market, among which the printing of holograms, security seals, barcodes, and quick response (QR) codes on the external label of the product stand out as means to prevent the counterfeiting of products and the adulteration of alcoholic beverages.

Although product counterfeiting is being mitigated by employing methods to prevent the copying, alteration, or any form of improper use of a brand and its label, it is also clear that, regarding the adulterated content of the bottle, there are still no mechanisms or alternatives that allow consumers to be informed if the bottle has been opened and is safe for consumption.

And although some more developed alternatives are known that have suggested changes in the design of bottle caps to make them completely tamper-proof, thus preventing access to the contents by those interested in adulterating the beverage, it is clear that these solutions have not been effective either, and the adulteration phenomenon continues to grow.

In fact, paradoxically, many of the mechanisms proposed for label security have contributed to offenders also copying the mechanisms implemented in the bottle, thus continuing to counterfeit labels by means of printing processes that apparently include all the security measures the manufacturer placed in the original label. In this way, this situation allows counterfeiters to use the bottle and its cap to adulterate the contents, since they are suitable for reuse and refilling on the black market, and consequently, the adulteration phenomenon will continue to proliferate.

Furthermore, for the consumer, there are no solutions that, in some way, can guide them to easily and immediately determine if the contents of the liquor bottle are suitable for consumption. Thus, it is clear that existing solutions focus on the external portion of the label, not on the consumer.

Consequently, it is clear that there is still an urgent need in the state of the art for a novel alternative to effectively and safely carry out the traceability and control of various products acquired by a user, particularly in the liquor industry, so as to prevent situations of counterfeiting, adulteration, alteration, or illegal distribution of such products.

### Brief description

Some of the embodiments will be described in detail, with references to the following Figures, wherein like designations denote like members, wherein:

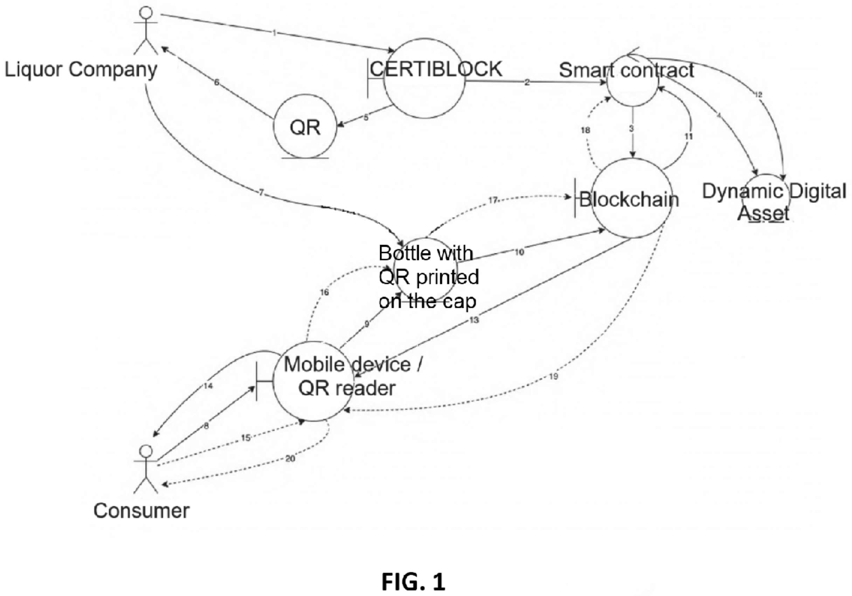

Figure 1 corresponds to a general schematic diagram illustrating the system for product authentication and traceability as in the present invention.

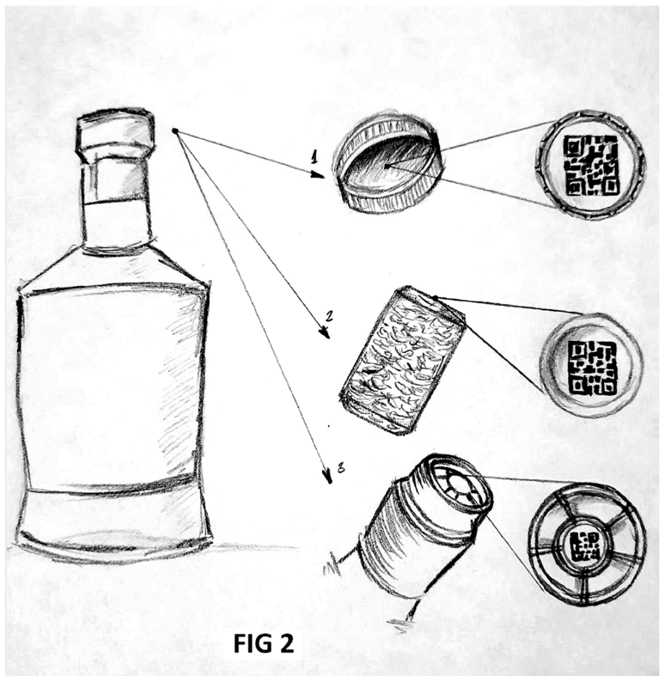

Figure 2 corresponds to a diagram illustrating the minting mechanism of the Dynamic Digital Asset that is part of the system and method for product authentication and traceability of the present invention.

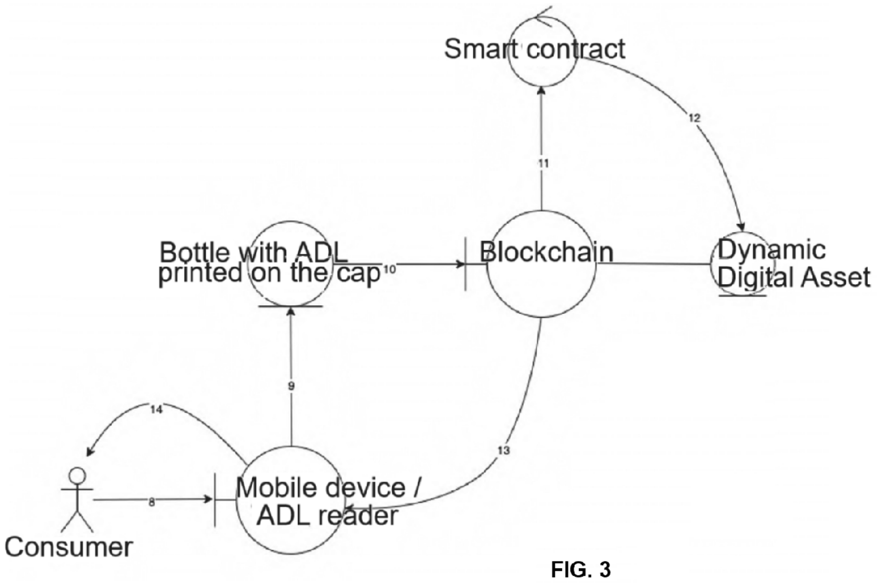

Figure 3 corresponds to a diagram illustrating the reading mechanism of the Dynamic Digital Asset by the user for the first time, which is part of the system and method for product authentication and traceability of the present invention.

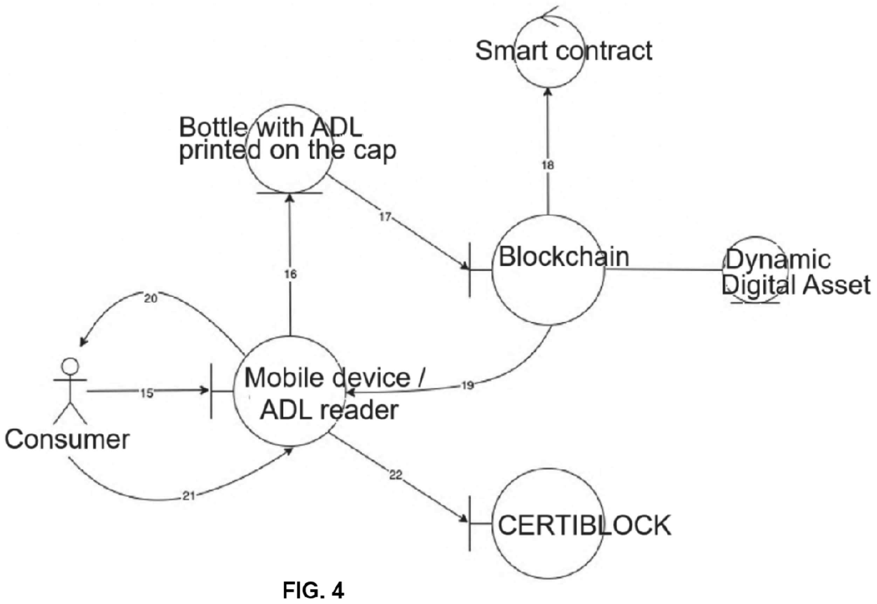

Figure 4 corresponds to a diagram illustrating the mechanism for reading the Dynamic Digital Asset for the second and subsequent times, which is part of the system and method for product authentication and traceability of the present invention.

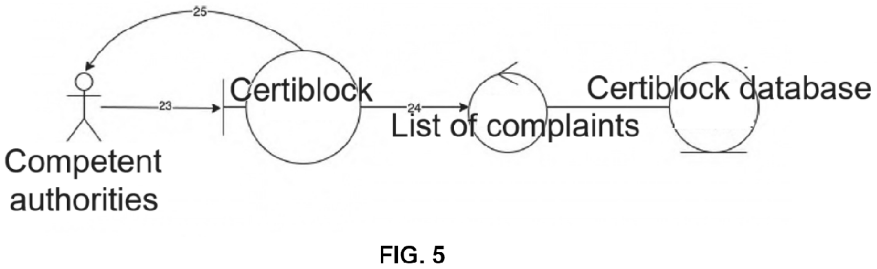

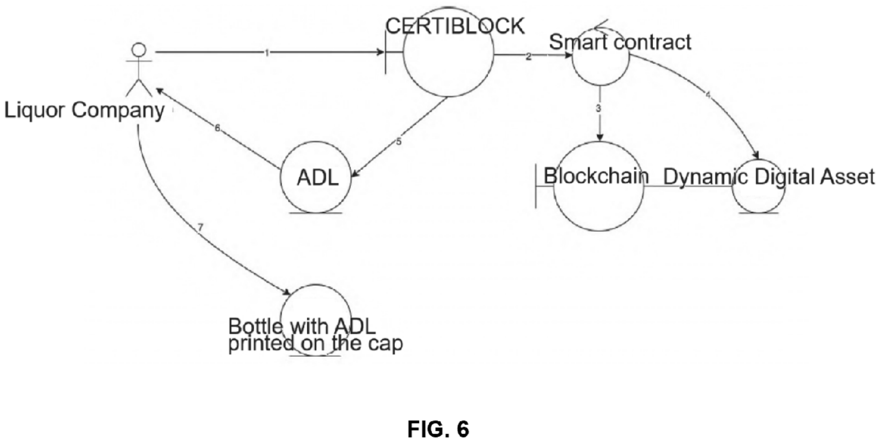

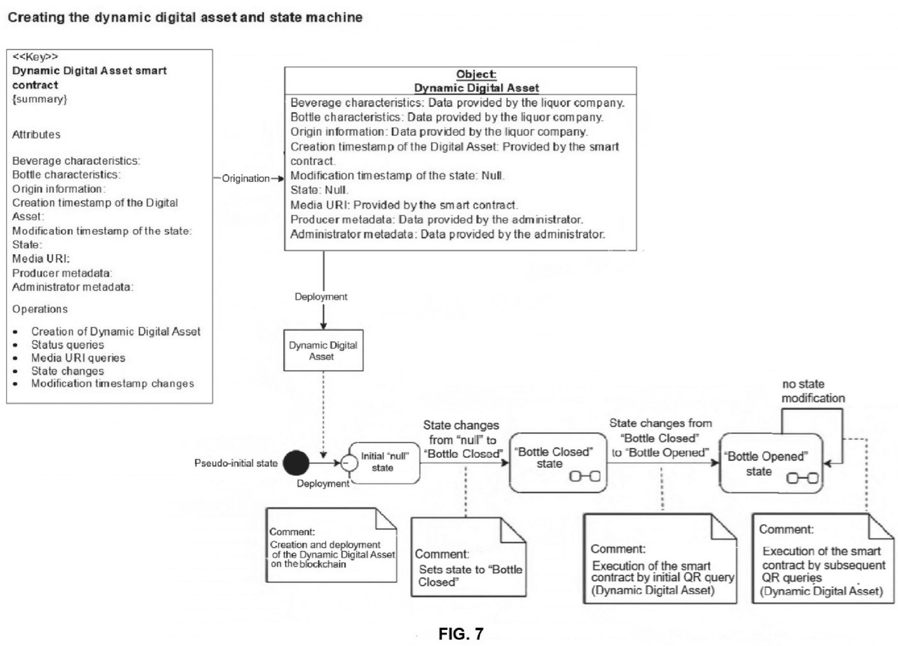

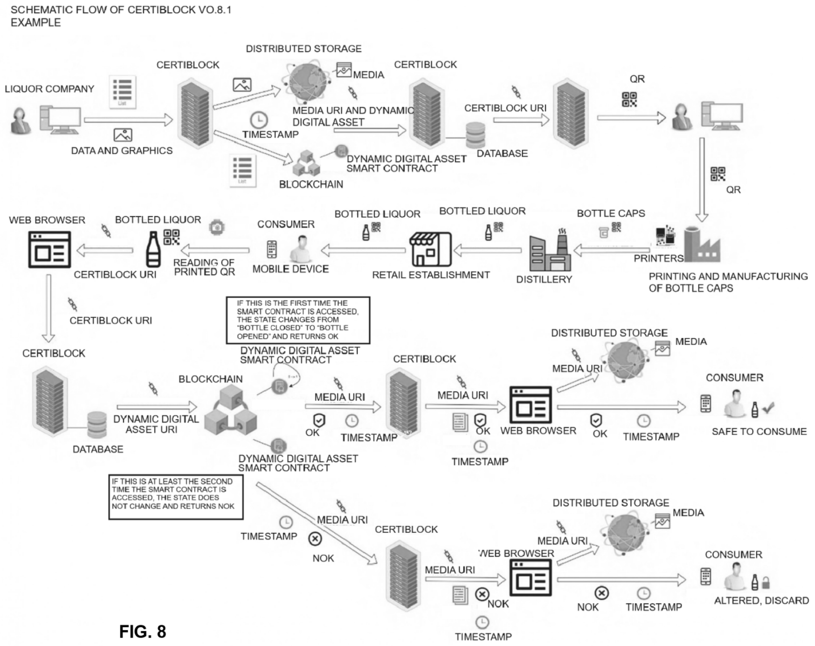

Figure 5 corresponds to a diagram illustrating the reporting mechanism by the user to the authorities upon noticing the possible adulteration of the bottle, which is part of the system and method for authentication and traceability of products such as that of the present invention.

### Detailed description

Embodiments of the present invention constitute alternatives to solve the shortcomings of the solutions available in the state of the art to prevent the adulteration or counterfeiting of products, as it provides an effective system and method for the digital authentication of products, allowing manufacturers and consumers to authenticate products themselves. In this way, the system and method of the present invention make it possible for consumers to only consume authentic and safe alcoholic beverages, with a guarantee of origin through dynamic authentication by themselves.

Thus, a consumer of a liquor bottle, who has an optical device, can verify the authenticity of the beverage by reading a quick response (QR) code, which is automatically recorded on a "blockchain"-type platform and the opening of the bottle, thus removing it from the reuse and/or refilling market, preventing adulteration of the contents with a single reading by the consumer and immediate transmission of that information to the "blockchain"-type platform via a smart contract. In this way, the reading data is converted into a digital asset capable of transmitting information about the origin, distribution, and consumption, and, once the bottle is opened, this container becomes unusable for refilling and reuse.

Thus, in a first embodiment, the present invention provides a first object corresponding to a system for product authentication and traceability, characterized in that it consists of the following elements:
(i) A "blockchain"-type digital platform, which is made up of centralized databases (off-chain), and decentralized nodes that contain the product data, with public visibility (on-chain); this platform serves to create and store certificates of product origin;
(ii) A product status verification element corresponding to a Dynamic Digital Asset (DA);
(iii) A QR code (Quick Response) to be placed on the internal part of the product to be authenticated (back of the cap, stopper, cork, dispenser, or device that serves to close a product) and that is only visible when said product is opened for consumption.
(iv) An application server that links the "Blockchain"-type digital platform (i) with the physical verification element (ii) associated with the Dynamic Digital Asset (DA), linked to the QR code (iii);
(v) An optical device to scan the QR code of (iii) and thus send a verification request to the application server (iv);
(vi) An authorization element that includes a database of QR codes (blank) delivered by the digital platform to the manufacturer of caps (stoppers, corks, dispensers, or devices that serve to close the product) for the exclusive printing of unique QR codes on the body or interior of the cap, stopper, cork, or dispenser, which are then delivered to the manufacturer of the alcoholic beverage;
(vii) An authentication element created by the application server (iv) to host the smart contract granted to the manufacturer of the alcoholic beverage, which functions to link the product information to the Dynamic Digital Asset (DA), and this, in turn, to the QR code.

In a preferred embodiment, the present invention provides a system for product authentication and traceability, characterized in that the dynamic digital asset linked to the QR code allows the updated status of the product to be defined through the reading of the QR code, where the first state has a single reading (bottle safe for consumption), and then the second state (previously opened bottle) can be read repeatedly, displaying the attributes and timestamp of its opening recorded on the blockchain.

In a preferred embodiment, the present invention provides a system for product authentication and traceability, characterized in that the optical device reads the Dynamic Digital Asset via the QR code (iii).

In a more preferred embodiment, the present invention provides a system for product authentication and traceability, characterized in that the "Blockchain"-type digital platform (i) validates and updates the information of the Digital Asset (ii) associated with the QR code (iii) via a smart contract (vii) once the QR code has been read.

In a more preferred embodiment, the present invention provides a system for product authentication and traceability, characterized in that the Blockchain-type platform allows validation of product attributes, such as: bottle status (closed or opened), timestamp of its opening, product attributes, among others.

In a still more preferred embodiment, the present invention provides a system for product authentication and traceability, characterized in that the Digital Asset (ii) is a Cryptoasset (not cryptocurrency).

In a still more preferred embodiment, the present invention provides a system for product authentication and traceability, characterized in that the product corresponds to a bottle of alcoholic beverage.

In another embodiment, the present invention provides a second object corresponding to a method for product authentication and traceability through a system as disclosed in the previous embodiments, characterized in that it consists of the following stages:
A. Mark each product to be authenticated with a unique QR code (iii);
B. Associate the QR code (iii) with a Digital Asset (DA) (ii) supported by the blockchain-type platform;
C. Link the QR code associated with the Digital Asset of stage (B) to a "Blockchain"-type digital platform (i) via an application server element (iv) to validate and update the information from this Digital Asset - QR code association once read (v).
D. Scan the QR code located on the internal part of the cap, stopper, cork, or dispenser or through a device that serves to close the product with a mobile device;
E. Generate a read order to the "Blockchain"-type digital platform once the first and only reading of the QR code - Dynamic Digital Asset is made by the user, which will transmit the current status information of the bottle, and will display on a first and only reading "safe for consumption", and if read subsequently and successively, the warning "previously opened bottle" will appear.
F. Validate the updated information in real time to the "Blockchain"-type digital platform, once the first and only reading of its first state of the Digital Asset is made, once the QR code is read by the consumer to authenticate the origin and thus generate the second state of the digital asset (previously opened bottle).

In a still more preferred embodiment, the present invention provides a method for product authentication and traceability, characterized in that the application server (iv) includes a database or Distributed Storage System (IPFS) to store information and metadata associated with the QR code.

In a still more preferred embodiment, the present invention provides a method for product authentication and traceability of products, characterized in that the scanning in stage D is carried out by an optical device.

In a still more preferred embodiment, the present invention provides a method for product authentication and traceability, characterized in that the Dynamic Digital Asset is a Cryptoasset that is unique in its aspect that composes the metadata (not a cryptocurrency).

In a preferred embodiment, the present invention provides a method for product authentication and traceability, characterized in that the product corresponds to a bottle of alcoholic beverage.

Thus, the foregoing embodiments generally describe the preferred forms for carrying out the objects of the present invention. However, a person skilled in the art will readily understand that modifications are possible without departing from the spirit of the present invention.

According to the above embodiments, one way to carry out the present invention is to implement a QR code linked to a digital asset (for example, a cryptoasset, an NFT), which corresponds to a verification means that guarantees transparency and reliability based on a blockchain-type platform. In this order of ideas, the system and method of the present invention make it possible to verify the authenticity of the product (proof of authenticity), particularly a bottle of liquor, through the blockchain platform that validates, via smart contracts, the information related to the authenticity and traceability of said product, such that the consumer immediately and safely has all the information of the bottle of liquor to be consumed, such as: safety for consumption, status of previously opened bottle, and even allows the consumer, in the same act, to activate a reporting mechanism before the competent entity in case of counterfeiting.

### Specific description of the invention

Specifically, the system and method of the present invention are developed by first marking each cap of the liquor bottle with a unique QR code, which is associated with a digital asset on a "blockchain"-type platform. Once the consumer performs the first reading of the QR code, an order is generated to the "blockchain" platform through a smart contract, and in this way, the state of the dynamic digital asset cryptoasset or the NFT associated with the QR code is updated, thereby generating the transaction and modifying the state of the cryptoasset or the NFT, or certificate, from "closed bottle" to "opened bottle". Thus, when the user activates the first reading of the bottle cap, they can be sure that the bottle is NOT reusable, and at the same time, they contribute to the control and traceability of the bottle by adding new attributes to the digital asset, such as the time and date of bottle opening.

In this regard, when the consumer contributes these new attributes of the bottle, effective and immediate control of it becomes possible. Thus, in an eventual situation of adulterated liquor, the consumer reads the same QR code on the cap and will be warned of the "Opened Bottle" status, allowing detection that the product has been adulterated and reused. In this situation, the system and method of the present invention make it possible for the consumer, manufacturing companies, and authorities to be alerted about the previous opening of the bottle. In this way, the system and method of the present invention make it possible for consumers to only consume authentic and safe alcoholic beverages, with a guarantee of origin through dynamic authentication by themselves.

Therefore, the consumer can be guaranteed the origin of the liquor, since the smart contract of the "blockchain" platform is the only one authorized to issue bottles within the original batches produced by the liquor factory. Accordingly, it is guaranteed that each bottle leaving the specific factory is affiliated with a smart contract (unique and not copyable) that will change the state of the bottle according to the reading condition of the Dynamic Digital Asset of each bottle.

**NFT:** Dynamic NFTs are a type of Non-Fungible Token associated with digital content that changes according to a reading condition and the change order of a smart contract. In this way, the use of NFTs as digital assets is valuable in the process of authenticating alcoholic beverages, as it contributes a secure, versatile, flexible, and scalable solution.

**BLOCKCHAIN:** The "blockchain" platform includes a database that stores information and metadata associated with the QR code, enabling access to the images stored in the Distributed Storage System (IPFS), which is a decentralized storage and content distribution network system used to store and share files efficiently, quickly, and securely. The use of IPFS ensures the security, availability, authenticity, and integrity of the resources stored.

**DYNAMIC AUTHENTICATION:** Dynamic authentication refers to the process that allows, upon the consumer's first reading, the validation of the state change of a dynamic digital asset. This dynamic authentication is completely secure, as it is carried out through a "blockchain" platform that guarantees the reliability of the bottle's information. Thus, the dynamic authentication of the dynamic digital asset guarantees that it is not possible to return to the first state of the bottle, and therefore, the product is safe for consumption.

### DEVELOPMENT OF THE SYSTEM AND METHOD OF THE PRESENT INVENTION:

The following is a description of the best way to carry out the present invention:

### GENERATION OF THE DIGITAL ASSET - DYNAMIC NFT

- The liquor company mints a Dynamic NFT on the Applicant's interface.
- The applicant enters all information of the alcoholic beverage.
- Attaches the product image.
- The company asks the Applicant to start the minting process of the product's Dynamic NFT.
- The liquor company uploads the product image through the Applicant to the Distributed Storage Network, and this returns the Applicant the access URI to the resource.
- The Applicant calls the "Smart Contract" hosted on the Blockchain platform via its URI and enters the data provided by the liquor company, the creation timestamp, and the image URI as metadata for the Dynamic NFT.
- The liquor company executes the "Smart Contract" through the Applicant to mint the requested Dynamic NFT with base state "0".
- The Dynamic NFT is stored on the "Blockchain", and this returns its URI to the Applicant.
- The Applicant stores the URI of the Dynamic NFT in its Database.
- The Applicant creates a unique identifier that becomes an Applicant's URI for each generated Dynamic NFT.

### PRINTING

- The liquor factory prints the QR code inside a single cap, which corresponds exclusively to the bottle indicated in the Dynamic NFT.
- The cap is placed on the corresponding bottle.
- The bottle is put on sale to the consumer.

### PQR READING FOR THE FIRST TIME

- The consumer uses their mobile device or optical reader capable of revealing the Applicant's URL contained in the QR code.
- The consumer reads the QR printed inside the bottle cap.
- Through the web browser, accesses the URL encoded in the QR code.
- The Applicant recognizes the unique identifier by searching its Database and obtains the URI of the Dynamic NFT on the "Blockchain" platform.
- The Applicant accesses the URI link to execute the corresponding "Smart Contract".
- The "Smart Contract" is executed, and if the NFT state is base "0", it changes to state "1", writes the timestamp of the state change, and returns the "OK" response to the Applicant.
- The Applicant informs the consumer via the browser with information that includes: the beverage IS safe to consume, metadata, the URI of the product image indicated in the Dynamic NFT, and any other pertinent information to communicate to the consumer, integrated and formatted for visualization.
- The Browser accesses the URI of the image indicated in the Dynamic NFT and is integrated into the view.
- The integrated and formatted information is displayed in the consumer visualization interface.

### QR CODE READING FOR THE SECOND AND SUBSEQUENT TIMES

- The consumer uses their mobile device or optical reader capable of revealing the Applicant's URL contained in the QR code.
- The consumer reads the QR code printed inside the bottle cap.
- Through the web browser, accesses the URL encoded in the QR code.
- The Applicant recognizes the unique identifier by searching its Database and obtains the URI of the Dynamic NFT on the "Blockchain" platform.
- If the "Smart Contract" detects that the state of the Dynamic NFT is "1", no change will be made to its state, and it will return the "NOK" response.
- The Applicant informs the consumer via the browser that the Beverage is NOT safe to consume, formats the metadata for visualization, the URI of the product image indicated in the Dynamic NFT, the timestamp of the saved state change, and any other pertinent information to communicate to the consumer. Similarly, the consumer may have a link to report product tampering and the recommendation to destroy the bottle.
- The Browser accesses the URI of the image indicated in the Dynamic NFT and is integrated into the view.
- The integrated and formatted information is displayed in the consumer visualization interface.

### GLOSSARY OF TERMS

**ADL** - DYNAMIC DIGITAL ASSET
**BLOCKCHAIN** - BLOCKCHAIN
**IPFS** - DISTRIBUTED STORAGE SYSTEM
**NFT** - NON-FUNGIBLE TOKEN
**PA -** PROOF OF AUTHENTICITY
**QR** - QUICK RESPONSE CODE
**SMART CONTRACT** - SMART CONTRACT

Any person skilled in the field of technology will readily understand that various modifications or variations of the system and method disclosed herein are possible, without departing from the scope and spirit of the invention. The embodiments and variations disclosed in the present invention are merely illustrative and should not be construed as limiting the scope of the invention, which is determined by the content of the following claims.

Although the present invention has been disclosed in the form of embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A system for the authentication and traceability of products, **characterized in that** it consists of the following elements:
(i) A "blockchain"-type digital platform, which is made up of centralized databases (off-chain), and decentralized nodes that contain product data, and its visibility is public (on-chain); this platform serves to create and store product origin certificates;
(ii) A product status verification element corresponding to a Dynamic Digital Asset (DA);
(iii) A QR code (Quick Response) to be placed on the internal part of the product to be authenticated (back of the cap, stopper, cork, dispenser, or device that serves to close a product) and that is only visible when said product is opened for consumption.
(iv) An application server that links the "Blockchain"-type digital platform (i) with the physical verification element (ii) associated with the Dynamic Digital Asset (DA), linked to the QR code (iii);
(v) An optical device to scan the QR code of (iii) and thus send a verification request to the application server (iv);
(vi) An authorization element that includes a database of QR codes (blank) delivered by the digital platform to the manufacturer of caps (stoppers, corks, dispensers, or devices that serve to close the product) for the exclusive printing of unique QR codes on the body or interior of the cap, stopper, cork, or dispenser, which are then delivered to the manufacturer of the alcoholic beverage;
(vii) An authentication element created by the application server (iv) to host the smart contract granted to the manufacturer of the alcoholic beverage, which functions to link the product information to the Dynamic Digital Asset (DA), and this, in turn, to the QR code.

2. A system as in claim 1, **characterized in that** the dynamic digital asset linked to the QR code allows the updated state of the product to be defined through the reading of the QR code, where the first state has a single reading (bottle safe for consumption), and then the second state (previously opened bottle) can be read repeatedly, displaying the attributes and timestamp of its opening recorded on the blockchain.

3. A system as in claims 1 to 2, **characterized in that** the optical device reads the Dynamic Digital Asset via the QR code (iii).

4. A system as in claims 1 to 3, **characterized in that** the "Blockchain"-type digital platform (i) validates and updates the information of the Digital Asset (ii) associated with the QR code (iii) via a smart contract (vii) once the QR code has been read.

5. A system as in claims 1 to 4, **characterized in that** the Blockchain-type platform allows validation of product attributes, such as: bottle status (closed or opened), timestamp of its opening, product attributes, among others.

6. A system as in claims 1 to 5, **characterized in that** the Digital Asset (ii) is a Cryptoasset (not cryptocurrency).

7. A system as in claims 1 to 6, **characterized in that** the product corresponds to a bottle of alcoholic beverage.

8. A method for the authentication and traceability of products through a system as in claims 1 to 7, **characterized in that** it consists of the following stages:
A. Mark each product to be authenticated with a unique QR code (iii);
B. Associate the QR code (iii) with a Digital Asset (DA) (ii) supported by the blockchain-type platform;
C. Link the QR code associated with the Digital Asset of stage (B) to a "Blockchain"-type digital platform (i) via an application server element (iv) to validate and update the information from this Digital Asset - QR code association once read (v).
D. Scan the QR code located on the internal part of the cap, stopper, cork, or dispenser or through a device that serves to close the product with a mobile device;
E. Generate a read order to the "Blockchain"-type digital platform once the first and only reading of the QR code - Dynamic Digital Asset is made by the user, which will transmit the current status information of the bottle, and will display on a first and only reading "safe for consumption", and if read subsequently and successively, the warning "previously opened bottle" will appear.
F. Validate the updated information in real time to the "Blockchain"-type digital platform, once the first and only reading of its first state of the Digital Asset is made, once the QR code is read by the consumer to authenticate the origin and thus generate the second state of the digital asset (previously opened bottle).

9. A method as in claim 8, **characterized in that** the application server (iv) includes a database or Distributed Storage System (IPFS) to store information and metadata associated with the QR code.

10. A method as in claims 8 to 9, **characterized in that** the scanning in stage D is carried out by an optical device.

11. A method as in claims 8 to 10, **characterized in that** the Blockchain-type platform allows validation of authenticated product attributes, such as: manufacturing date, opening date, opening time, product reference, product technical sheet, legality stamp by region, batch.

12. A method as in claims 8 to 11, **characterized in that** the Dynamic Digital Asset is a unique Cryptoasset in its aspect that makes up the metadata (not a cryptocurrency).

13. A method as in claims 8 to 12, **characterized in that** the product corresponds to a bottle of alcoholic beverage.
